(19) Europäisches Patentamt
European Patent Office
Office européen des brevets

(11) **EP 2 488 415 B1**

(12) **FASCICULE DE BREVET EUROPEEN**

(45) Date de publication et mention
de la délivrance du brevet:
**14.08.2013   Bulletin 2013/33**

(51) Int Cl.:
*B64G 1/36* *(2006.01)*          *B64G 1/10* *(2006.01)*
*B64G 1/24* *(2006.01)*          *B64G 1/28* *(2006.01)*

(21) Numéro de dépôt: **08802881.6**

(22) Date de dépôt: **20.03.2008**

(86) Numéro de dépôt international:
**PCT/EP2008/053385**

(87) Numéro de publication internationale:
**WO 2008/145428 (04.12.2008 Gazette 2008/49)**

(54) **DISPOSITIF D'ESTIMATION DE LA NORMALE A UNE ORBITE POUR SATELLITE PLACE EN ORBITE**

VORRICHTUNG ZUM BESTIMMEN DER ORBITNORMALEN FÜR EINEN SATELLITEN IM ORBIT

DEVICE FOR ESTIMATING THE NORMAL TO AN ORBIT FOR SATELLITE PLACED IN ORBIT

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité:  **08.02.2007   FR 0753142**

(43) Date de publication de la demande:
**22.08.2012   Bulletin 2012/34**

(73) Titulaire: **THALES**
**92200 Neuilly-sur-Seine (FR)**

(72) Inventeurs:
• **GUYOT, François**
**38620 Saint Geoire en Valdaine (FR)**
• **JAUFFRAUD, Eric**
**06210 Mandelieu La Napoule (FR)**

(74) Mandataire: **Esselin, Sophie et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**FR-A- 2 595 147**

• **JIANQI W ET AL: "ATTITUDE AND ORBIT DETERMINATION FOR SMALL SATELLITE USING MAGNETOMETER MEASUREMENT" AIRCRAFT ENGINEERING, BUNHILL PUBLICATIONS LTD. LONDON, GB, vol. 75, no. 3, 2003, pages 241-246, XP001160110**
• **PSIAKI M L: "AUTONOMOUS ORBIT AND MAGNETIC FIELD DETERMINATION USING MAGNETOMETER AND STAR SENSOR DATA" JOURNAL OF GUIDANCE AND CONTROL AND DYNAMICS, AIAA, RESTON, VA, US, vol. 18, no. 3, 1 mai 1995 (1995-05-01), pages 584-592, XP000543098 ISSN: 0731-5090**

**Description**

Le domaine de l'invention est celui des satellites et notamment des satellites d'observation positionnés après séparation du lanceur, en orbite de type hélio-synchrone. Cette orbite est une orbite héliocentrique telle que la période de révolution d'un l'objet coincide avec la période de rotation du Soleil. L'altitude et l'inclinaison de ce type d'orbite d'observation sont généralement déterminées de façon à ce que l'angle entre le plan d'orbite et la direction du soleil demeure à peu près constant, en dépit de la dérive annuelle du plan orbite : de la sorte, un satellite placé sur une telle orbite repasse au-dessus d'un point donné de la surface terrestre à la même heure solaire locale. Ceci est souhaité lorsqu'on prend notamment des photographies en lumière visible, car l'éclairement solaire varie peu d'un cliché photographique à l'autre.

De manière générale, le satellite en orbite est commandé depuis une station au sol par des liaisons radiofréquence et envoie en retour des informations à la station au sol. Le satellite peut être dans divers modes opérationnels, les modes opérationnels étant adaptés aux phases de mission et aux circonstances opérationnelles, par exemple il peut s'agir du mode IAM « Mode initial d'acquisition « écrit après que le satellite soit séparé du lanceur. Dans ce mode le satellite doit éxécuter son initialisation et acquérir une attitude nominale.

Pour gérer l'ensemble de ces modes, le satellite est équipé d'un système autonome complexe comportant des niveaux décisionnel, opérationnel et fonctionnel. Le niveau décisionnel est chargé de la programmation des activités de la plate-forme et/ou de la charge utile, le niveau opérationnel est chargé de l'éxécution des opérations (décomposition et routage des commandes, surveillance de l'état global du système,...) et le niveau fonctionnel regroupe les traitements et boucles de contrôle des sous-systèmes classiques :

- la communication avec les stations sol (émission de télémètrie, réception de télécommande, contrôle des batteries et des antennes) ;
- la gestion du contrôle thermique ;
- la gestion de l'alimentation (surveillance et contrôle des batteries et des panneaux solaires) ;
- le système de contrôle d'attitude et orbite encore dénommé couramment par l'acronyme « SCAO » ou en langue anglo-saxonne « AOCS ». Ce sous-sytème rassemble notamment les fonctions suivantes :

  ■ le guidage ;
  ■ la navigation ;
  ■ le contrôle.

La présente invention se situe plus précisément dans la problématique d'un système de contrôle d'attitude comportant un dispositif d'estimation de la normale à l'orbite, correspondant à un vecteur perpendiculaire au plan de l'orbite. Ce type de dispositif est notamment utilisé pour les phases de contrôle du satellite qui nécessitent la connaissance de la direction perpendiculaire au plan de l'orbite dans le cas de satellites placés en orbites dites quasi polaires, dont le plan est proche du plan qui passe par les pôles de la terre. Sont notamment concernées les orbites hélio-synchrones particulièrement utilisées pour les satellites d'observation de la terre. L'inclinaison du plan d'une orbite hélio-synchrone dépend de l'altitude. Elle varie entre 97° et 102° par rapport au plan de l'équateur pour des altitudes allant de 400km à 1500km.

Actuellement des premières solutions de l'art connu, proposées pour élaborer des dispositifs d'estimation d'attitude de satellite comprennent des senseurs terrestres, ils souffrent de problème de fiabilité, de performance et d'agencement mécaniques avec les autres organes du satellite. En effet, les senseurs peuvent être fragiles, facilement dégradables notamment pendant les phases d'assemblage, intégration et tests du satellite.

Il est également possible de rencontrer des problèmes de performance, l'algorithme de traitement des informations délivrées par les senseurs terre est complexe. Le temps de convergence est pénalisant pour le contrôle du satellite. Des problèmes d'agencement peuvent également être présents: les champs de vue des senseurs ne doivent pas interférer avec les appendices du satellite (antenne, panneau solaire ...). Cela peut contraindre à monter directement les senseurs sur ces appendices. Cependant, le montage de ces senseurs sur les appendices n'est pas forcement faisable.

D'autres solutions de l'art connu, reposent sur la détermination d'attitude à partir d'un modèle de champ magnétique terrestre embarqué. Ces solutions consistent à comparer un champ magnétique mesuré avec un champ magnétique prédit et à piloter le satellite en fonction de l'écart observé. De telles solutions nécessitent la connaissance à bord de la position sur orbite (PSO).

Il est également connu de l'article JIANQI W ET AL : « ATTITUDE AND ORBIT DETERMINATION FOR SMALL SATELLITE USING MAGNETOMETER MEASUREMENT » AIRCRAFT ENGINEERING, BUNHILL PUBLICATIONS LTD.LONDON, GB, vol.75, n°.3, 2003, pages 241-246, XP00160110, un dispositif d'estimation de la normale à une orbite de type hélio-synchrone sur laquelle est positionné un satellite et comprenant des moyens pour mesurer la vitesse de rotation du satellite et des moyens pour mesurer le champ magnétique terrestre. Dans ce contexte, la présente invention a pour objet une solution permettant de réduire la complexité des dispositifs existants pour calculer les paramètres de l'orbite, car il n'existe pas à ce jour de moyens autonomes, fiables et rapides de détermination de la PSO : l'enregistrement à bord de la connaissance de la PSO, avant lancement du satellite, ne convient pas, en raison des potentiels changements de la PSO du satellite dus aux aléas du lancement.

Le téléchargement de la PSO, après lancement, depuis le sol, ne convient pas en raison des pertes potentielles de communication du satellite avec le sol.

Les systèmes autonomes de type GNSS (global navigation space system) comme le GPS ou autres systèmes de radio navigation comme Doris ne conviennent pas non plus en raison de leur complexité et de leur temps d'initialisation.

Dans ce contexte la présente invention propose une solution basée sur la détermination de la normale au plan de l'orbite (direction perpendiculaire au plan de l'orbite) à partir de la mesure du champ magnétique terrestre depuis le satellite, particulièrement bien adaptée à la problématique des satellites placés en orbite terrestre hélio-synchrone.

Plus précisément l'invention a pour objet un dispositif d'estimation de la normale à une orbite de type hélio-synchrone sur laquelle est positionné un satellite, ledit dispositif comportant des moyens pour mesurer la vitesse de rotation du satellite caractérisé en ce qu'il comporte :

- des moyens pour mesurer le champ magnétique terrestre ;
- des moyens pour calculer la rotation du champ magnétique par rapport au satellite ;
- des moyens pour calculer la normale à l'orbite à partir de la vitesse de rotation du satellite et de la rotation du champ magnétique.

Avantageusement, les moyens pour calculer la rotation du champ magnétique comprennent des moyens pour effectuer consécutivement dans le temps, différentes mesures de champ magnétique.

Avantageusement, les moyens pour calculer la normale à l'orbite comprennent le calcul de la vitesse de rotation inertielle du champ magnétique à partir de la vitesse de rotation du satellite et de la rotation du champ magnétique.

Avantageusement, le calcul de la vitesse de rotation inertielle du champ magnétique est obtenue en combinant la vitesse de rotation du satellite et la vitesse de rotation du champ magnétique par rapport au satellite.

Avantageusement, le calcul de la vitesse de rotation inertielle du champ magnétique correspond au produit vectoriel du vecteur champ magnétique normalisé à un instant t et du vecteur champ magnétique normalisé à un instant $t - \Delta t$.

Selon une variante de l'invention, les moyens pour mesurer le champ magnétique terrestre comprennent des moyens de filtrage des mesures de champ magnétique de type passe bas.

Selon une variante de l'invention, les moyens de mesure de la rotation du satellite comprennent des moyens de filtrage de type passe bas.

Selon une variante de l'invention, les moyens pour mesurer la vitesse de rotation du satellite comprennent un gyromètre.

Selon une variante de l'invention, les moyens pour mesurer le champ magnétique comprennent un magnétomètre.

L'invention a aussi pour objet un système de contrôle d'attitude de satellite en orbite comportant des senseurs, des actuateurs et comprenant un dispositif d'estimation de normale à une orbite selon l'invention.

Avantageusement les senseurs comprennent un magnétomètre pour mesurer le champ magnétique et un gyromètre pour mesurer la rotation du satellite.

La présente invention permet ainsi la réalisation d'un système de contrôle d'attitude de satellite, fiable et robuste pour un mode AOCS de type « sortie lanceur » correspondant à une attitude de satellite après séparation du lanceur, qui garantit un pointage satellite sûr pour la charge utile optique (pas d'éblouissement par le soleil ni d'orientation dans le sens du vol). En effet l'instrument optique embarqué serait dégradé par le passage du soleil dans son champ de vue et par la rencontre de particules d'oxygène atomique (aussi appelées ATOX pour atomic oxygen)

Ce dispositif peut être utilisé pour des satellites d'observation. Il est également intéressant pour les phases de pilotage du satellite, dites de survie. Ces phases consistent à orienter le satellite pour un fonctionnement autonome qui préserve l'état des équipements.

L'invention sera mieux comprise et d'autres avantages apparaîtront à la lecture de la description qui va suivre donnée à titre non limitatif et grâce aux figures annéxées parmi lesquelles :

- la figure 1 illustre de manière schématique un système classique de contrôle d'attitude ;
- la figure 2 illustre les trois modules unitaires composant un dispositif d'estimation de la normale à l'orbite selon l'invention ;
- la figure 3 illustre le calcul du vecteur rotation à partir de deux mesures consécutives du champ magnétique ;
- la figure 4 illustre l'estimation de la normale à l'orbite réalisée par le dispositif de l'invention.

L'idée de base est de procéder à la mesure de la rotation du champ magnétique terrestre qui a la particularité d'être quasiment dans le plan d'orbite pour une orbite hélio-synchrone.

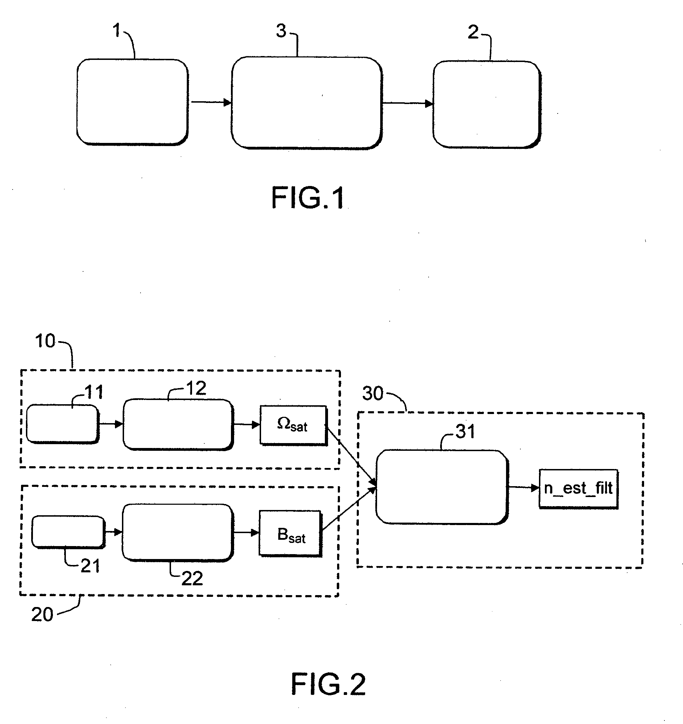

De manière générale, le dispositif de l'invention fait partie d'un système de contrôle d'attitude de satellite. Le système de contrôle d'attitude consiste à élaborer une commande vers des actuateurs à partir de mesures de senseurs. Les senseurs 1 et les actuateurs 2 sont des équipements électroniques et mécaniques qui s'interfacent avec un calculateur central 3 comme illustré en figure 1, le contrôle s'effectue par logiciel au sein du calculateur.

Le dispositif d'estimation de la normale à l'orbite comprend des senseurs intégrés dans des systèmes électroniques et des modules de traitement logiciel intégrés dans un calculateur.

Le dispositif élabore un vecteur n_est_filt correspondant à une estimation filtrée de la normale en repère satellite à partir des mesures de vitesse de rotation du satellite $\Omega_{sat}$ et du champ magnétique terrestre $B_{sat}$.

Typiquement deux types de senseurs peuvent être utilisés :

- le premier type est de type magnétomètre pour la mesure du champ magnétique,
- le second type est de type gyromètre pour la mesure de la vitesse de rotation du satellite.

Avantageusement, plusieurs modules de traitement peuvent être utilisés au sein du calculateur :

- Un premier module de traitement et de filtrage des données du gyromètre pour le calcul de la vitesse de rotation du satellite,
- Un second module de filtrage des données issues d'un magnétomètre pour le calcul du champ magnétique terrestre,
- Un troisième module de traitement pour le calcul du vecteur estimation de la normale à l'orbite.

Le dispositif d'estimation de la normale à l'orbite peut être décomposé en 3 dispositifs unitaires comme illustré en figure 2 :

- Un premier dispositif unitaire 10 pour la mesure de la vitesse de rotation du satellite comportant notamment un senseur de type gyromètre 11 et le premier module de traitement 12 permettant la détermination de la vitesse de rotation du satellite $\Omega_{sat}$;
- Un second dispositif unitaire 20 pour la mesure du champ magnétique terrestre comportant notamment un magnétomètre 21 et le second module de traitement 22 permettant la détermination du vecteur champ magnétique en repère satellite $B_{sat}$;
- Un troisième dispositif unitaire 30 pour l'estimation de la normale à l'orbite comportant notamment le troisième module 31 de traitement délivrant une estimation filtrée de la normale à l'orbite en repère satellite n_est_filt.

Nous allons décrire ci-après plus en détails les différents dispositifs unitaires :

1) Le dispositif 10 pour mesurer la vitesse de rotation du satellite comporte un gyromètre 11, équipement électronique délivrant une mesure 3 axes de la vitesse de rotation du satellite. Les données délivrées par les gyromètres sont filtrés par des filtres 12, dits passe bas, dans le but de réduire le bruit de la mesure. Dans le cas présenté, le filtrage est fait par logiciel au niveau du calculateur central du satellite. La mesure filtrée est représentée par la variable $\Omega_{sat}$, vecteur à 3 dimensions.

2) Le dispositif 20 pour mesurer le champ magnétique comprend un magnétomètre 21, équipement électronique délivrant une mesure 3 axes du champ magnétique terrestre. Les données délivrées sont avantageusement filtrées par un filtre 22 dit passe bas, dans le but de réduire le bruit de la mesure. Avantageusement, le filtrage peut être fait par logiciel au niveau du calculateur central du satellite. La mesure filtrée est représentée par la variable $B_{sat}$, vecteur à 3 dimensions.

3) Le dispositif d'estimation de la normale à l'orbite est effectuée par logiciel au niveau du calculateur. Il prend en entrées les mesures filtrées de champ magnétique terrestre et de vitesse de rotation du satellite. Il délivre un vecteur n_est, correspondant à l'estimation de la normale en repère satellite à 3 dimensions selon l'axe et le sens de rotation du champ magnétique. n_est_filt est obtenu après filtrage et représente le résultat de l'estimation de la normale à l'orbite.

Selon une première variante de l'invention, le traitement peut être décomposé selon la séquence d'étapes suivantes :

- une première étape de calcul de la rotation du champ magnétique par rapport au satellite ;

- une seconde étape de calcul de la vitesse de rotation inertielle du champ magnétique ;
- une troisème étape de filtrage du vecteur rotation du champ magnétique.

Etape 1 : Calcul de la rotation du champ magnétique par rapport au satellite:

Le calcul du vecteur rotation $R_B$ se fait à partir de deux mesures consécutives espacées d'un intervalle de temps $\Delta t$. L'intervalle de temps correspond à la période de traitement.
Le vecteur de rotation $R_B$ est calculé à partir du produit vectoriel du vecteur champ magnétique normalisé courant à un instant t et du vecteur champ magnétique normalisé précédent à un instant t-$\Delta t$ :

$$R_B = (B_{t-\Delta t} \wedge B_t) / (|B_{t-\Delta t}| . |B_t|) \quad : \text{Equation (1)}$$

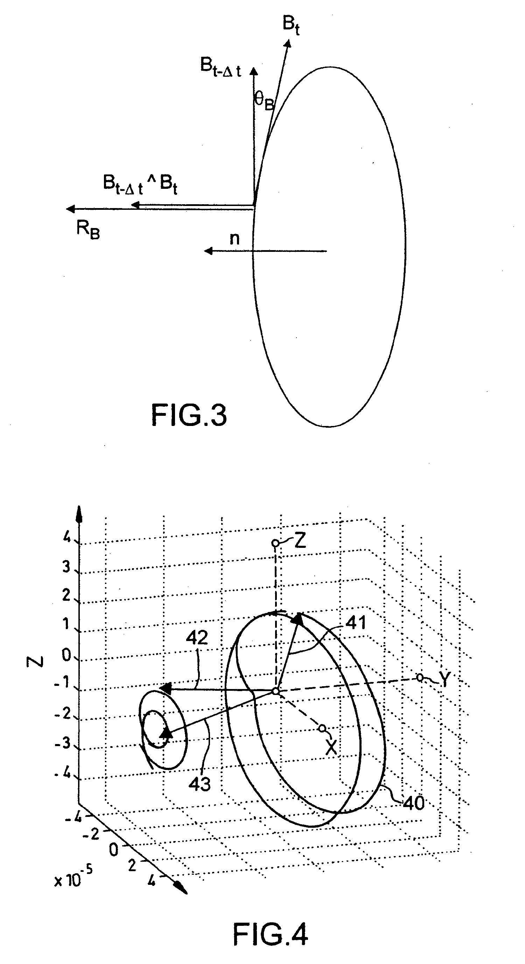

La figure 3 illustre ce calcul.

Etape 2 : Calcul de la vitesse de rotation inertielle du champ magnétique

La vitesse de rotation inertielle du champ magnétique est obtenue en combinant la vitesse de rotation satellite et la vitesse de rotation du champ magnétique par rapport au satellite :

$$\theta_{B/i} . n\_est = R_B + \Omega_{sat} . \Delta t \quad : \text{Equation (2)}$$

avec $\theta_{B/i}$ : l' angle de rotation du champ magnétique par rapport à un repère inertiel
n_est : l'estimation de la normale en repère satellite

n_est, est un vecteur unitaire exprimé en repère satellite orthonormé.qui représente le sens et la direction de la vitesse de rotation inertielle du champ magnétique.
n_est, est également une première approximation de la normale à l'orbite.

Etape 3 : Filtrage du vecteur rotation du champs magnétique :

Le traitement consiste à prendre en entrée le vecteur n_est , et à appliquer un filtre passe bas en repère inertiel pour obtenir une estimation filtrée n_est_filt.
L'entrée $\Omega_{sat}$ permet de projeter n_est, en repère inertiel et d'exprimer n_est_filt, en repère satellite après filtrage.
n_est_filt, est un vecteur à trois dimensions qui représente l'estimation de la normale à l'orbite en repère satellite.
Selon une seconde variante de l'invention les première et seconde étapes sont réalisées différemment, c'est à dire que l'on procède :

- dans un premier temps au calcul d'un vecteur $B_{prog}$ par propagation du champ magnétique :

$$B_{prog} = B_{t-\Delta t} - (\Omega_{sat} . \Delta t) \wedge B_{t-\Delta t} \quad \text{Equation (3)}$$

- puis dans un second temps au calcul de la vitesse de rotation inertielle du champ magnétique avec produit vectoriel et normalisation :

$$\theta_{B/i} . n\_est = (B_{prog} \wedge B_t) / (|B_{prog}| . |B_t|) \quad \text{Equation (4)}$$

Le résultat obtenu selon l'une des première ou seconde variantes est ensuite filtré.
La figure 4 illustre dans un repère 3 axes X,Y,Z et pour une orbite schématisée par la courbe 40 ;

5

- selon la courbe 41 , la trace du vecteur champ magnétique. Le champ magnétique effectue 2 tours sur une orbite ;
- selon la courbe 42 , la trace du vecteur rotation du champ magnétique ;
- la moyenne (ou lissage par filtrage) du cône décrit par le vecteur 42 qui se rapproche du vecteur 43 correspondant à la normale à l'orbite.

**Revendications**

1. Dispositif d'estimation de la normale à une orbite de type hélio-synchrone sur laquelle est positionné un satellite, ledit dispositif comportant des moyens pour mesurer la vitesse de rotation du satellite ($\Omega_{sat}$) et des moyens pour mesurer le champ magnétique terrestre ($B_{sat}$); **caractérisé en ce qu'**il comporte :

   - des moyens pour calculer la rotation du champ magnétique par rapport au satellite ($R_B$) ;
   - des moyens pour calculer la normale à l'orbite (n_est_filt) à partir de la vitesse de rotation du satellite et de la rotation du champ magnétique.

2. Dispositif d'estimation de la normale à une orbite selon la revendication 1, **caractérisé en ce que** les moyens pour calculer la rotation du champ magnétique comprennent des moyens pour effectuer consécutivement dans le temps différentes mesures de champ magnétique.

3. Dispositif d'estimation de la normale à une orbite selon l'une des revendications 1 ou 2, **caractérisé en ce que** les moyens pour calculer la normale à l'orbite comprennent le calcul de la vitesse de rotation inertielle du champ magnétique à partir de la vitesse de rotation du satellite ($\Omega_{sat}$) et de la rotation du champ magnétique ($R_B$).

4. Dispositif d'estimation de la normale à une orbite selon la revendication 3, **caractérisé en ce que** le calcul de la vitesse de rotation inertielle du champ magnétique est obtenue en combinant la vitesse de rotation du satellite et la vitesse de rotation du champ magnétique par rapport au satellite.

5. Dispositif d'estimation de la normale à une orbite selon l'une des revendications 1 à 4, **caractérisé en ce que** les moyens pour mesurer le champ magnétique terrestre ($B_{sat}$) comprennent des moyens de filtrage des mesures de champ magnétique de type passe bas .

6. Dispositif d'estimation de la normale à une orbite selon l'une des revendications 1 à 5, **caractérisé en ce que** les moyens de mesure de la rotation du satellite comprennent des moyens de filtrage de type passe bas.

7. Dispositif d'estimation de la normale à une orbite selon l'une des revendications 1 à 6, **caractérisé en ce que** les moyens pour mesurer la vitesse de rotation du satellite comprennent un gyromètre.

8. Dispositif d'estimation de la normale à une orbite selon l'une des revendications 1 à 7, **caractérisé en ce que** les moyens pour mesurer le champ magnétique comprennent un magnétomètre.

9. Système de contrôle d'attitude de satellite en orbite comportant des senseurs et des actuateurs **caractérisé en ce qu'**il comporte un dispositif d'estimation de normale à une orbite selon l'une des revendications 1 à 8 .

10. Système de contrôle d'attitude de satellite en orbite selon la renvendication 9, **caractérisé en ce que** les senseurs comprenent un magnétomètre pour mesurer le champ magnétique.

**Patentansprüche**

1. Vorrichtung zum Schätzen der Normalen zu einem Orbit des heliosynchronen Typs, auf dem sich ein Satellit befindet, wobei die Vorrichtung Mittel zum Messen der Rotationsgeschwindigkeit des Satelliten ($\Omega_{sat}$) und Mittel zum Messen des Magnetfeldes der Erde ($B_{sat}$) umfasst, **dadurch gekennzeichnet, dass** sie Folgendes umfasst:

   - Mittel zum Berechnen der Rotation des Magnetfelds mit Bezug auf den Satelliten ($R_B$);
   - Mittel zum Berechnen der Normalen zum Orbit (n_est_filt) auf der Basis der Rotationsgeschwindigkeit des Satelliten und der Rotation des Magnetfeldes.

**2.** Vorrichtung zum Schätzen der Normalen zu einem Orbit nach Anspruch 1, **dadurch gekennzeichnet, dass** die Mittel zum Berechnen der Rotation des Magnetfelds Mittel zum konsekutiven Durchführen verschiedener Magnetfeldmessungen über die Zeit umfassen.

**3.** Vorrichtung zum Schätzen der Normalen zu einem Orbit nach Anspruch 1 oder 2, **dadurch gekennzeichnet, dass** die Mittel zum Berechnen einer Normalen zum Orbit das Berechnen der Trägheitsrotationsgeschwindigkeit des Magnetfelds auf der Basis der Rotationsgeschwindigkeit des Satelliten ($\Omega_{sat}$) und der Rotation des Magnetfelds ($R_B$) umfassen.

**4.** Vorrichtung zum Schätzen der Normalen zu einem Orbit nach Anspruch 3, **dadurch gekennzeichnet, dass** das Berechnen der Trägheitsrotationsgeschwindigkeit des Magnetfelds durch Kombinieren der Rotationsgeschwindigkeit des Satelliten mit der Rotationsgeschwindigkeit des Magnetfelds mit Bezug auf den Satelliten erhalten wird.

**5.** Vorrichtung zum Schätzen der Normalen zu einem Orbit nach einem der Ansprüche 1 bis 4, **dadurch gekennzeichnet, dass** die Mittel zum Messen des Magnetfelds der Erde ($B_{sat}$) Magnetfeldmessfiltermittel des Tiefpasstyps umfassen.

**6.** Vorrichtung zum Schätzen der Normalen zu einem Orbit nach einem der Ansprüche 1 bis 5, **dadurch gekennzeichnet, dass** die Mittel zum Messen der Rotation des Satelliten Filtermittel des Tiefpasstyps umfassen.

**7.** Vorrichtung zum Schätzen der Normalen zu einem Orbit nach einem der Ansprüche 1 bis 6, **dadurch gekennzeichnet, dass** die Mittel zum Messen der Rotationsgeschwindigkeit des Satelliten ein Gyrometer umfassen.

**8.** Vorrichtung zum Schätzen der Normalen zu einem Orbit nach einem der Ansprüche 1 bis 7, **dadurch gekennzeichnet, dass** die Mittel zum Messen des Magnetfelds ein Magnetometer umfassen.

**9.** System zum Steuern der Lage eines Satelliten im Orbit, das Sensoren und Aktuatoren umfasst, **dadurch gekennzeichnet, dass** es eine Vorrichtung zum Schätzen der Normalen zu einem Orbit nach einem der Ansprüche 1 bis 8 umfasst.

**10.** System zum Steuern der Lage eines Satelliten im Orbit nach Anspruch 9, **dadurch gekennzeichnet, dass** die Sensoren ein Magnetometer zum Messen des Magnetfeldes umfassen.

**Claims**

**1.** A device for estimating the normal line to an orbit of the helio-synchronous type on which a satellite is positioned, said device comprising means for measuring the rotation speed of said satellite ($\Omega_{sat}$) and means for measuring the magnetic field of the earth ($B_{sat}$), **characterised in that** it comprises:

- means for calculating the rotation of the magnetic field relative to said satellite ($R_B$);
- means for calculating the normal line to the orbit (n_est_filt) on the basis of the rotation speed of said satellite and the rotation of the magnetic field.

**2.** The device for estimating the normal line to an orbit according to claim 1, **characterised in that** said means for calculating the rotation of the magnetic field comprise means for carrying out various magnetic field measurements consecutively over time.

**3.** The device for estimating the normal line to an orbit according to claim 1 or 2, **characterised in that** said means for calculating the normal line to the orbit comprise the calculation of the inertial rotation speed of the magnetic field on the basis of the rotation speed of said satellite ($\Omega_{sat}$) and of the rotation of the magnetic field ($R_B$).

**4.** The device for estimating the normal line to an orbit according to claim 3, **characterised in that** said calculation of the inertial rotation speed of the magnetic field is obtained by combining the rotation speed of said satellite and the rotation speed of the magnetic field relative to said satellite.

**5.** The device for estimating the normal line to an orbit according to any one of claims 1 to 4, **characterised in that** said means for measuring the magnetic field of the earth ($B_{sat}$) comprise magnetic field measurement filtering means of the low-pass type.

6. The device for estimating the normal line to an orbit according to any one of claims 1 to 5, **characterised in that** said means for measuring the rotation of the satellite comprise filtering means of the low-pass type.

7. The device for estimating the normal line to an orbit according to any one of claims 1 to 6, **characterised in that** said means for measuring the rotation speed of the satellite comprise a gyrometer.

8. The device for estimating the normal line to an orbit according to any one of claims 1 to 7, **characterised in that** said means for measuring the magnetic field comprise a magnetometer.

9. A system for controlling the attitude of a satellite in orbit comprising sensors and actuators, **characterised in that** it comprises a device for estimating the normal line to an orbit, according to any one of claims 1 to 8.

10. The system for controlling the attitude of a satellite in orbit according to claim 9, **characterised in that** said sensors comprise a magnetometer for measuring the magnetic field.

FIG.1

FIG.2

FIG.3

FIG.4

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **JIANQI W et al.** ATTITUDE AND ORBIT DETERMINATION FOR SMALL SATELLITE USING MAGNETOMETER MEASUREMENT. *AIRCRAFT ENGINEERING, BUNHILL PUBLICATIONS LTD.LONDON, GB,* 2003, vol. 75 (3), 241-246